# EUROPEAN PATENT APPLICATION

(11) **EP 3 412 950 A1**
(43) Date of publication of application: **12.12.2018**
(21) Application number: 17747199.2
(22) Date of filing: 19.01.2017
(51) Int. Cl.: F16L 11/08, F16L 33/28

(54) **MARINE HOSE**

(30) Priority: 04.02.2016 JP 2016019914
(71) Applicant: The Yokohama Rubber Co., Ltd., Minato-ku Tokyo 105-8685 (JP)
(72) Inventor: ONO Shunichi, Hiratsuka-shi Kanagawa 254-8601 (JP); FUSE Noriyuki, Hiratsuka-shi Kanagawa 254-8601 (JP)
(74) Representative: Grünecker Patent- und Rechtsanwälte PartG mbB
(86) International application number: PCT/JP2017/001661
(87) International publication number: WO 2017/135040

(57) **Abstract**

Provided is a marine hose capable of balancing high oil resistance and high flexibility in an inner surface layer that constitutes a hose body.

In a marine hose (1), a range Z of at least around 100 mm in the longitudinal direction of a hose body (3), with respect to an insertion side end E of a connection fitting (2) of an inner surface layer (4) of the marine hose (1), is a layered structure wherein a first rubber layer (4A) and a second rubber layer (4B) having different physical properties are layered in the radial direction. The rubber of the first rubber layer (4A) has an elongation at break of not less than 700% and not greater than 750%, and has an expansion coefficient of greater than 30% and not greater than 40% after 48 hours of immersion at 40°C in each of IRM 901, IRM 902, and IRM 903 specified in ISO 1817 in a test method according to method 2 of ISO 6722. The rubber of the second rubber layer (4B) has an elongation at break of not less than 550% and not greater than 600%, and has an expansion coefficient of not greater than 30% after 48 hours of immersion at 40°C in each of IRM 901, IRM 902, and IRM 903.

## Description

### Technical Field

The present invention relates to a marine hose, and more particularly to a marine hose capable of balancing high oil resistance and high flexibility in the inner surface layer that constitutes the hose body.

### Background Art

A marine hose is connected between a sea tanker and a land facility and various fluids such as crude oil may be transported via the marine hose. In a marine hose which transports crude oil or the like, there is a need for adequate oil resistance in the inner surface layer of the hose body with which the crude oil or the like is in direct contact.

On the other hand, when a marine hose is used, various external forces act on the hose body due to the effects of the natural environment such as waves, wind, and tidal currents. In addition, in the laying operation or recovery operation of a marine hose, external forces such as pulling, bending, and twisting act on the hose body due to these operations. Here, when the flexibility of the inner surface layer is low, the inner surface layer is susceptible to damage when an external force acts on the hose body. In particular, the inner surface layer is susceptible to damage due to stress concentration in the vicinity of the insertion side end of a connection fitting connected to both ends of the hose body in the longitudinal direction. When the inner surface layer is damaged, the fluid being transported leaks to the outside of the marine hose and spreads to the surrounding area. There is a demand for an inner surface layer which is resistant to damage.

A marine hose which employs a resin layer for the innermost layer in direct contact with a fluid that is being transported has been previously proposed to enhance the oil resistance of the inner surface layer (see Patent Document 1). However, a resin layer has lower flexibility than a rubber layer. In addition, when attempting to simultaneously enhance the oil resistance and flexibility of the inner surface layer, it has been extremely difficult to balance high oil resistance with high flexibility because the two properties are typically in a trade-off relationship.

### Citation List

### Patent Literature

Patent Document 1: JP 2006-144878 A

### Summary of Invention

### Technical Problem

An object of the present invention is to provide a marine hose capable of balancing high oil resistance and high flexibility in the inner surface layer that constitutes the hose body.

### Solution to Problem

To achieve the object described above, the marine hose according to an embodiment of the present invention is a marine hose including: a hose body including an inner surface layer, a reinforcing layer disposed on an outer circumferential side of the inner surface layer, and an outer surface layer disposed on an outer circumferential side of the reinforcing layer; and a connection fitting connected to both end parts of the hose body in a longitudinal direction;
a range of at least around 100 mm in the longitudinal direction of the hose body, with respect to an insertion side end of the connection fitting of the inner surface layer, being a layered structure in which a plurality of rubber layers having different physical properties are layered in a radial direction of the hose body;
a rubber in the innermost rubber layer of the layered structure having an elongation at break of not less than 700% and not greater than 750%, and having an expansion coefficient of greater than 30% and not greater than 40% after 48 hours of immersion at 40°C in each of IRM 901, IRM 902, and IRM 903 specified in ISO 1817 in a test method according to method 2 of ISO 6722; and
a rubber in the rubber layers constituting the inner surface layer other than the innermost rubber layer having an elongation at break of not less than 550% and not greater than 600%, and having an expansion coefficient of not greater than 30% after 48 hours of immersion at 40°C in each of IRM 901, IRM 902, and IRM 903 specified in ISO 1817 in the test method according to method 2 of ISO 6722.

### Advantageous Effects of Invention

According to an embodiment of the present invention, when an external force acts on the hose body, the range over which stress is most likely to be concentrated, that is, a range of around 100 mm in the longitudinal direction of the hose body with respect to the insertion side end of the connection fitting of the inner surface layer, has a special layered structure in which a plurality of rubber layers with different physical properties are layered. Specifically, a rubber having a certain level of oil resistance such that the swelling ratio according to a predetermined test method is greater than 30% and not greater than 40%, and having a large elongation at break and excellent flexibility, is used for the innermost rubber layer in direct contact with the connection fitting and the fluid to be transported. A rubber having a certain level of flexibility and excellent oil resistance such that the swelling ratio according to a predetermined test method is not greater than 30% is used for the rubber layers constituting the inner surface layer other than the innermost rubber layer. With this layered structure, the functions of the inner surface layer can be divided between a rubber layer primarily responsible for flexibility and a rubber layer primarily responsible for oil resistance. Thus, a balance of high flexibility and high oil resistance can be achieved for the entire inner surface layer.

For example, in one specification, the thickness of the inner surface layer is not less than 3 mm, the thickness of the innermost rubber layer is not less than 1 mm, and the total thickness of rubber layers constituting the inner surface layer other than the innermost rubber layer is not less than 2 mm. With this specification, the high oil resistance of the inner surface layer can be stably maintained. The inner surface layer has, for example, a two-layer structure.

The specification may also be such that the layered structure is only disposed over a range of around 100 mm in the longitudinal direction of the hose body with respect to the insertion side end of the connection fitting. With this specification, the range of the special layered structure of the inner surface layer can be minimized, while the high flexibility and high oil resistance of the inner surface layer can be balanced effectively.

### Brief Description of Drawings

FIG. 1 is a vertical cross-sectional view illustrating the upper half of an end portion in the longitudinal direction of the marine hose according to an embodiment of the present invention.
FIG. 2 is an explanatory diagram illustrating the marine hose of FIG. 1 from a front view (arrow view of the region from one connection fitting side to the other connection fitting side).
FIG. 3 is an explanatory diagram illustrating a hose line formed by connecting the marine hoses.
FIG. 4 is a vertical cross-sectional view illustrating a state in which the marine hose of FIG. 1 undergoes bending deformation.
FIG. 5 is an explanatory diagram illustrating another embodiment of the marine hose from a side view.

### Description of Embodiments

The marine hose of the present invention will be described hereinafter based on an embodiment illustrated in the drawings.

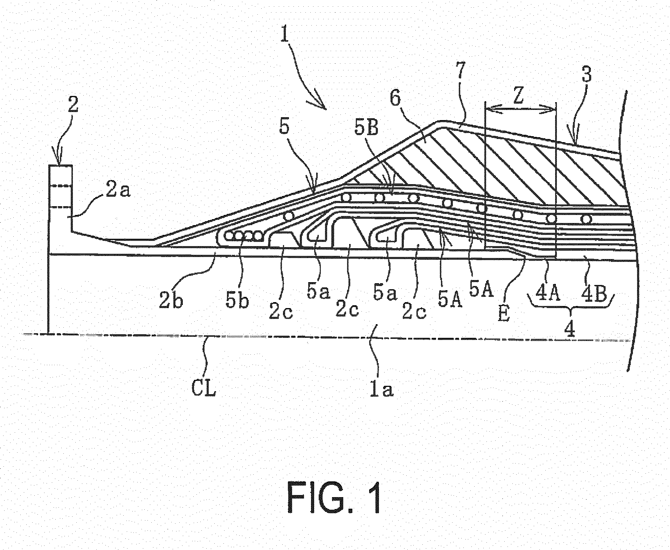

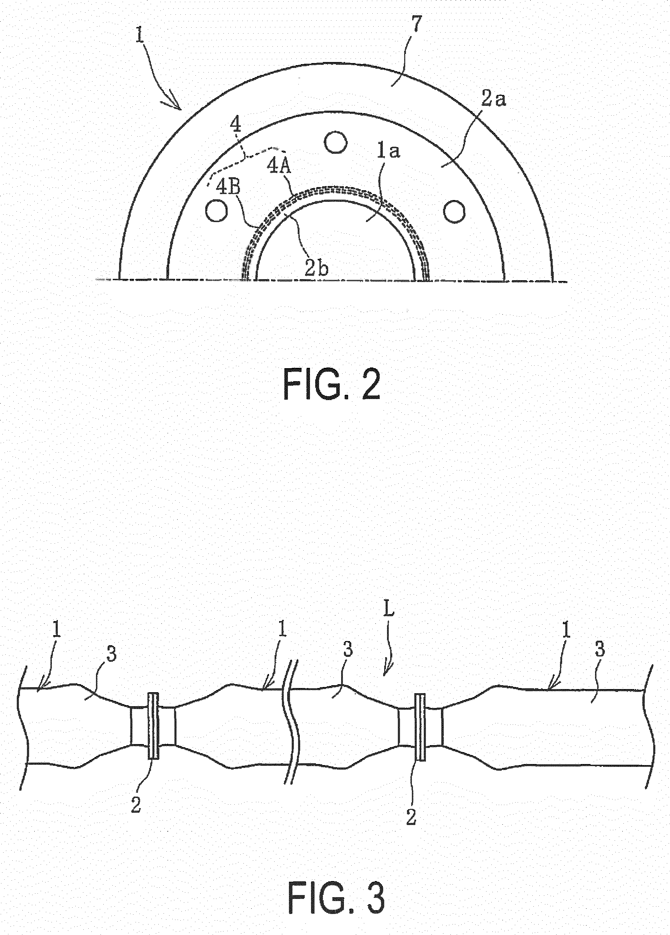

A marine hose 1 according to an embodiment of the present invention illustrated in FIGS. 1 and 2 includes a hose body 3 and a connection fitting 2 connected to both end parts of the hose body 3 in the longitudinal direction. As illustrated in FIG. 3, a plurality of marine hoses 1 are connected via respective connection fittings 2 to form a hose line L. In this embodiment, the hose line L is in a state of floating in the ocean, and external forces act on the marine hose 1 due to waves, wind, tidal currents, and the like. The marine hose 1 therefore undergoes various deformations such as elongation, bending, and twisting.

The hose body 3 includes an inner surface layer 4, a reinforcing layer 5 disposed on the outer circumferential side of the inner surface 4 (main reinforcing layer 5A and main body wire layer 5B), and an outer surface layer 7 disposed on the outer circumferential side of the reinforcing layer 5. Other necessary members are also provided as necessary on the hose body 3. Since the marine hose 1 of this embodiment is a floating-type hose, a buoyant layer 6 formed from a buoyant material such as a sponge is interposed between the reinforcing layer 5 and the outer surface layer 7. The present invention can be applied not only to a floating-type marine hose 1, but also to a submarine-type marine hose which does not have a buoyant layer 6.

The connection fitting 2 includes a disc-shaped flange 2a and a tubular nipple 2b, wherein a tip side coupled with the flange 2a is inserted into the hose body 3. The outer circumferential surface of the tip of the nipple 2b is an inclined surface in which the outer diameter of the nipple decreases toward the tip side. The inner surface layer 4, the main reinforcing layer 5A, and the main body wire layer 5B are sequentially wrapped and layered toward the outer circumferential side on the outer circumference of the nipple 2b, and the outermost periphery is covered by the outer surface layer 7. The inner circumferential side of the inner surface layer 4 serves as a fluid flow path 1a. The line CL illustrated in FIG. 1 is a center line extending in the axial direction of the marine hose 1.

A fluid transported through the marine hose 1 is in direct contact with the inner circumferential surface of the inner surface layer 4. The inner surface layer 4 is made of an acrylonitrile rubber or the like having excellent oil resistance, for example. The details of the inner surface layer 4 will be given below.

The main body wire layer 5B is formed by winding a metal wire in a spiral-like manner at predetermined intervals around the outer circumferential rubber layer of the main reinforcing layer 5A. The main reinforcing layer 5A is formed by layering a plurality of reinforcing cord layers prepared by coating reinforcing cords with rubber.

The nipple wires 5a and 5b at each of the ends of the main reinforcing layer 5A and the main body wire layer 5B are fixed to the nipple 2b by a fixing ring 2c or the like protruding from the outer circumferential surface of the nipple 2b. The outer surface layer 7 is made of a non-water-permeable material such as a rubber.

A portion or all of the range in the longitudinal direction of the hose body 3 of the inner surface layer 4 has a layered structure in which a plurality of rubber layers having different physical properties are layered in the radial direction of the hose body 3. Specifically, a range Z of at least around 100 mm in the longitudinal direction of the hose body 3, with respect to an insertion side end E of the connection fitting 2 of the inner surface layer 4, assumes this layered structure. In this embodiment, the inner surface layer 4 has a two-layer structure including a first rubber layer 4A and a second rubber layer 4B on the outer circumferential side of the first rubber layer. The number of layers can be determined appropriately and may be, for example, around 2 to 4 layers. In addition, in this embodiment, the layered structure is disposed in the range Z of around 100 mm in the longitudinal direction of the hose body 3 with respect to the insertion side end E of the connection fitting 2.

The rubber of the first rubber layer 4A has an elongation at break of not less than 700% and not greater than 750%. The elongation at break in the present invention is a measurement determined by the test method specified in ISO 37. A larger value of elongation at break indicates superior flexibility. Further, the rubber of the first rubber layer 4A exhibits an expansion coefficient of greater than 30% and not greater than 40% after 48 hours of immersion at 40°C in each of IRM 901, IRM 902, and IRM 903 specified in ISO 1817 in a test method according to method 2 of ISO 6722. A smaller value of the expansion coefficient indicates superior oil resistance.

The rubber of the second rubber layer 4B has an elongation at break of not less than 550% and not greater than 600%. Further, the rubber of the second rubber layer 4B exhibits an expansion coefficient of not greater than 30%. For example, the value of the expansion coefficient is not less than 20% and not greater than 30%.

Accordingly, the rubber of the first rubber layer 4A has a certain level of oil resistance and exhibits flexibility superior to that of the rubber of the second rubber layer 4B. The rubber of the second rubber layer 4B has a certain level of flexibility and exhibits oil resistance superior to that of the rubber of the first rubber layer 4A.

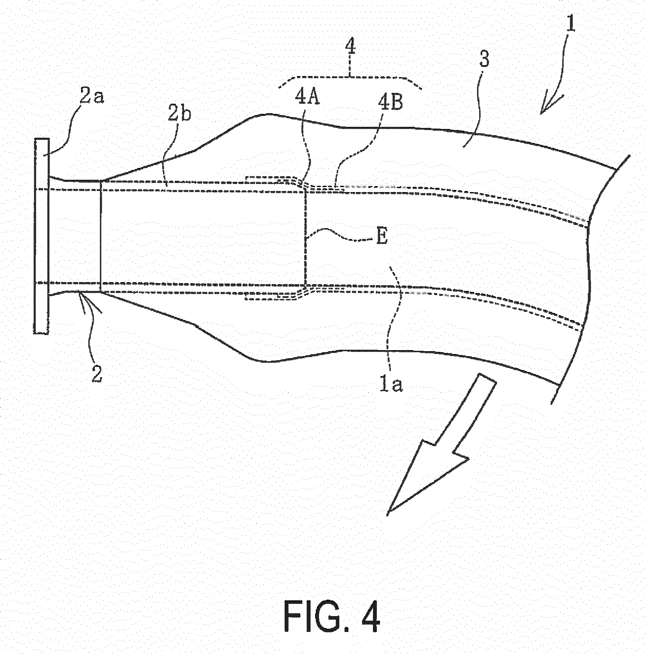

When an external force acts on the marine hose 1 (hose body 3) and the hose body 3 undergoes bending deformation as illustrated in FIG. 4, stress is concentrated on the inner surface layer 4 in the vicinity of the tip E of the nipple 2b. In the marine hose 1 according to an embodiment of the present invention, the range Z in which stress is most concentrated when an external force acts on the hose body 3, that is, the range Z of around 100 mm in the longitudinal direction of the hose body 3 with respect to the insertion side end E of the connection fitting 2 has the layered structure described above.

The rubber of the first rubber layer 4A has a certain level of oil resistance and exhibits excellent flexibility and a relatively large elongation at break, which is advantageous for mitigating stress concentration. Therefore, cracks are unlikely to form even when the hose body 3 undergoes bending deformation. Moreover, since the rubber has a certain level of oil resistance, a sufficient service life can be secured, even when the fluid to be transported is crude oil or the like. In addition, even when cracks are formed in the first rubber layer 4A, the second rubber layer 4B adjacent to the outer circumferential side has oil resistance superior to that of the first rubber layer 4A. Therefore, a sufficient service life can be secured. Since the second rubber layer 4B has a certain level of flexibility and is not be in direct contact with the connection fitting 2 (nipple 2b), the layer is unlikely to undergo stress greater than that of the first rubber layer 4A. Therefore, even when the hose body 3 undergoes bending deformation, cracks are not easily formed in the second rubber layer 4B.

In this way, the functions of the marine hose 1 according to an embodiment of the present invention are divided between the first rubber layer 4A primarily responsible for flexibility and the second rubber layer 4B primarily responsible for oil resistance by using a special layered structure for the inner surface layer 4. It may appear to be better to increase the oil resistance of the innermost first rubber layer 4A, which is in direct contact with the fluid, rather than the second rubber layer 4B. However, it is presently difficult to obtain a rubber which exhibits high oil resistance and high flexibility. In addition, no matter how high the oil resistance may be, the oil resistance will not function when the layer is damaged due to cracking. Therefore, it is actually more important for the innermost first rubber layer 4A to exhibit a performance (flexibility) in which cracks are less likely to form than to exhibit oil resistance. Accordingly, such special layered structure can balance high flexibility and high oil resistance for the entire inner surface layer 4.

The thickness of the inner surface layer 4 may be, for example, not less than 3 mm; the thickness of the innermost first rubber layer 4A may be not less than 1 mm; and the total thickness of the rubber layers constituting the inner surface layer 4 other than the first rubber layer 4A (in this embodiment, only the second rubber layer 4B) may be not less than 2 mm. With this specification, the high oil resistance of the inner surface layer 4 is easy to maintain stably. Taking into consideration the ease of production and the like, the inner surface layer 4 preferably has a two-layer structure. Note that the upper limits of the thicknesses of the inner surface layer 4 and the first rubber layer 4A and the upper limit of the total thickness of the rubber layers constituting the inner surface layer 4 other than the first rubber layer 4A are determined appropriately within a range that does not excessively diminish the flexibility of the inner surface layer 4 and are determined, for example, within a range of 14 mm.

As in this embodiment, in the specification in which the layered structure of the inner surface layer 4 is disposed only in the range Z of around 100 mm in the longitudinal direction of the hose body 3 with respect to the insertion side end E of the connection fitting 2, high flexibility and high oil resistance of the inner surface layer 4 can be balanced effectively while the range of this special layered structure can be minimized.

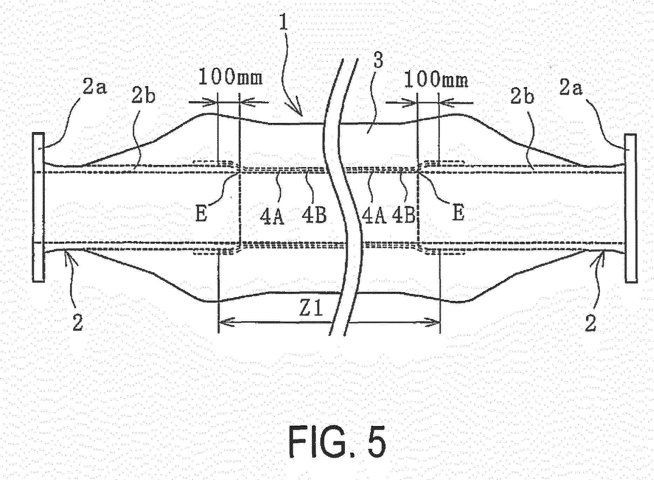

As illustrated in FIG. 5, the special layered structure of the inner surface layer 4 may also be provided in a range Z1 extending from a position of 100 mm on the back side in the longitudinal direction of the hose body 3 with respect to the insertion side end E of the connection fitting 2 (nipple 2b) on one end side to a position of 100 mm on the back side in the longitudinal direction of the hose body 3 with respect to the insertion side end E of the connection fitting 2 (nipple 2b) on the other end side. Alternatively, the special layered structure of the inner surface layer 4 may also be provided over the entire longitudinal direction (entire range) of the hose body 3.

### Reference Signs List

1 Marine hose
1a Fluid flow path
2 Connection fitting
2a Flange
2b Nipple
2c Fixing ring
3 Hose body
4 Inner surface layer
4A First rubber layer
4B Second rubber layer
5 Reinforcing layer
5A Main reinforcing layer
5a Nipple wire
5B Main body wire layer
5b Nipple wire
6 Buoyant layer
7 Outer surface layer
L Hose line

## Claims

1. A marine hose comprising:
a hose body including an inner surface layer, a reinforcing layer disposed on an outer circumferential side of the inner surface layer, and an outer surface layer disposed on an outer circumferential side of the reinforcing layer; and
a connection fitting connected to both end parts of the hose body in a longitudinal direction;
a range of at least around 100 mm in the longitudinal direction of the hose body, with respect to an insertion side end of the connection fitting of the inner surface layer, being a layered structure in which a plurality of rubber layers having different physical properties are layered in a radial direction of the hose body;
a rubber in the innermost rubber layer of the layered structure having an elongation at break of not less than 700% and not greater than 750%, and having an expansion coefficient of greater than 30% and not greater than 40% after 48 hours of immersion at 40°C in each of IRM 901, IRM 902, and IRM 903 specified in ISO 1817 in a test method according to method 2 of ISO 6722; and
a rubber in the rubber layers constituting the inner surface layer other than the innermost rubber layer having an elongation at break of not less than 550% and not greater than 600%, and having an expansion coefficient of not greater than 30% after 48 hours of immersion at 40°C in each of IRM 901, IRM 902, and IRM 903 specified in ISO 1817 in the test method according to method 2 of ISO 6722.

2. The marine hose according to claim 1, wherein
a thickness of the inner surface layer is not less than 3 mm;
a thickness of the innermost rubber layer is not less than 1 mm; and
a total thickness of rubber layers constituting the inner surface layer other than the innermost rubber layer is not less than 2 mm.

3. The marine hose according to claim 1 or 2, wherein the inner surface layer has a two-layer structure.

4. The marine hose according to any one of claims 1 to 3, wherein the layered structure is only disposed over a range of around 100 mm in the longitudinal direction of the hose body with respect to the insertion side end of the connection fitting.
